# FASCICULE DE BREVET EUROPEEN

(11) **EP 1 809 413 B1**
(45) Date de publication et mention de la délivrance du brevet: **28.03.2018**
(21) Numéro de dépôt: 05819327.7
(22) Date de dépôt: 07.11.2005
(51) Int. Cl.: B01J 19/12, B01J 12/02, B01J 12/00

(54) **PROCEDE DE PRODUCTION DE POUDRES NANOMETRIQUES OU SUB-MICROMETRIQUES EN FLUX CONTINU SOUS L'ACTION D'UNE PYROLYSE LASER**
Verfahren zur Fliessfertigung von nanometrischen oder submikrometrischen Pulvern durch die Wirkung eines pyrolytischen Lasers
METHOD FOR CONTINUOUS FLOW PRODUCTION OF NANOMETRIC OR SUB-MICROMETRIC POWDERS BY THE ACTION OF A PYROLYTIC LASER

(30) Priorité: 09.11.2004 FR 0452578
(43) Date de publication de la demande: 25.07.2007
(73) Titulaire: Commissariat à l'Énergie Atomique et aux Énergies Alternatives, 75015 Paris (FR)
(72) Inventeur: TENEGAL, François, F-75014 PARIS (FR); GUIZARD, Benoît, F-94000 CRETEIL (FR); HERLIN-BOIME, Nathalie, F-91400 ORSAY (FR); PORTERAT, Dominique, F-91400 ORSAY (FR)
(74) Mandataire: Ahner, Philippe
(86) Numéro de dépôt international: PCT/FR2005/050929
(87) Numéro de publication internationale: WO 2006/051233

(56) Documents cités:
- DE-A1- 10 163 313
- US-A- 4 689 129
- US-A- 4 788 222
- US-A- 4 895 628
- US-A1- 2001 045 063
- US-A1- 2003 166 379
- PATENT ABSTRACTS OF JAPAN vol. 013, no. 021 (C-560), 18 janvier 1989 (1989-01-18) & JP 63 224732 A (NKK CORP), 19 septembre 1988 (1988-09-19)

## Description

### DOMAINE TECHNIQUE

La présente invention concerne un procédé selon la revendication 1.

### ÉTAT DE LA TECHNIQUE ANTÉRIEURE

Dans le domaine des matériaux denses élaborés par métallurgie de poudres, les propriétés de résistance à la rupture, de dureté, de résistance à l'usure, pour des applications mécaniques et thermomécaniques, tendent à s'améliorer à mesure que la taille des grains de poudre diminue. Lorsque cette taille atteint le domaine nanométrique (1 à 100 nanomètres) ces propriétés peuvent évoluer fortement, et une bonne aptitude au fluage peut être alors observée, avec une éventuelle superplasticité (un matériau polycristallin est qualifié de superplastique lorsqu'il peut supporter une déformation en traction de plus de 100% sans manifester de striction) dans le cas du ZrO₂, SiC, nanocomposites Si₃N₄/Sic, et Cu. L'aptitude au fluage permet d'envisager, par exemple, le formage à chaud de céramiques en évitant les étapes d'usinage. Mais les procédés d'élaboration de matériaux utilisant des poudres nanométriques sont encore mal maîtrisés en raison des caractéristiques spécifiques de ces poudres (réactivité, agglomération...), de leur disponibilité et de leur coût. En ce qui concerne les poudres nanométriques non-oxyde une protection de l'oxydation, qui peut être nécessaire, peut s'avérer dangereuse (effets pyrophoriques). L'enrobage des grains par des matériaux écrans, organiques ou minéraux, est alors souhaitable.

Dans le domaine de la catalyse pour le traitement des effluents, des poudres oxydes nanométriques dopées par des métaux (pour la catalyse) permettent d'obtenir des dépôts avec une activité catalytique accrue, à condition d'obtenir une bonne dispersion des phases actives à la surface de ces poudres.

Dans le domaine de la cosmétique, l'utilisation de poudres en TiO₂ ou en ZnO dans les formulations permet d'accroître la protection dans le domaine ultra-violet. L'utilisation de poudres nanométriques photochromiques permet également l'émergence de nouveaux produits colorés.

Dans le domaine des dispositifs à écrans plats, l'utilisation de poudres nanométriques permet de réaliser des dépôts fortement luminescents de longueur d'onde ajustable (P dopé ZnO ou ZnS, Si).

Dans le domaine du stockage de l'énergie, l'utilisation de poudres nanométriques oxydes composites pour l'élaboration d'électrodes de batteries au lithium permet d'augmenter les capacités de stockage énergétique.

Dans ces différents domaines l'utilisation de poudres nanométriques (5-100 nanomètres) ou sub-micrométriques (100 - 500 nanomètres) permet ainsi d'obtenir de remarquables améliorations de propriétés.

De nombreuses méthodes de synthèse de telles poudres existent, notamment la pyrolyse laser en flux. Cette méthode est basée sur l'interaction entre l'émission d'un laser de puissance au CO₂ et un flux de réactifs constitué de gaz, de liquide sous forme d'aérosols ou de mélange des deux, de sorte que la composition chimique de la poudre peut être multi-éléments. La vitesse de passage des réactifs dans le faisceau laser permet de contrôler la taille des poudres. Le flux de réactifs absorbe l'énergie du faisceau laser, ce qui conduit à la décomposition des molécules de réactifs puis la formation de particules par germination homogène et croissance dans une flamme. La croissance des particules est bloquée par effet de trempe. Cette méthode est une méthode souple de mise en oeuvre permettant la synthèse de poudres nanométriques variées de type carbure, oxyde ou nitrure avec de hauts rendements. Elle est également adaptée à la synthèse de poudres composites telles que les poudres Si/C/N ou encore Si/C/B.

Un document de l'art connu, la demande de brevet WO 98/37961, décrit un dispositif de synthèse de masse de telles poudres, par pyrolyse laser en flux en allongeant la section les injecteurs de réactifs le long du grand axe du faisceau laser. Ce dispositif comprend une chambre de réaction avec une fenêtre pour introduire le faisceau laser et une ouverture allongée des injecteurs. Dans ce dispositif une focalisation radiale par lentille entraîne une augmentation de densité de puissance au point focal mais aussi une réduction des taux de production car la section des injecteurs doit être réduite par rapport au cas non-focalisé. Ce dispositif fait abstraction du paramètre densité de puissance qui est un paramètre clé influant sur la structure, la composition, la taille des grains de poudre ainsi que sur les rendements. Ce dispositif ne permet pas d'assurer une production à grande échelle de poudres nécessitant l'utilisation de fortes densités de puissance. L'extrapolation des taux de production se fait donc au détriment d'un possible ajustement des caractéristiques des poudres. De plus la section des injecteurs ne peut être allongée de façon trop importante dans l'axe du faisceau laser. En effet à mesure que le flux de réactif est pénétré par le laser, il y a absorption progressive de l'énergie jusqu'à ce que l'énergie restante ne soit plus suffisante. La réaction de pyrolyse étant une réaction à effet de seuil, il y a un moment où l'énergie incidente par centimètres carré devient trop faible pour initier la réaction de synthèse. De plus, la diminution de la quantité d'énergie absorbée à mesure que le flux de réactifs est pénétré peut être de nature à induire des modifications de structure, de taille et de composition de la poudre formée sur un même lot, d'autant plus que la puissance laser incidente est élevée. Le document US2001/0045063 décrit un procédé de production de poudres nanométriques ou sub-micrométriques en flux continu sous l'action d'une pyrolyse laser en au moins une zone d'interaction entre un faisceau émis par un laser et un flux de réactifs émis par un injecteur.

Le document US4788222 décrit la production de poudre au moyen d'un laser.

Le document US2003/0166379 décrit aussi la production de poudre au moyen d'un laser.

L'invention a pour objet de pallier ces inconvénients en permettant, par synthèse de masse de poudres nanométriques ou sub-micrométriques reposant sur le principe de la pyrolyse laser en flux, de produire à faible coût plus de 500 grammes par heure de telles poudres en flux continu.

### EXPOSÉ DE L'INVENTION

L'invention concerne un procédé de production de poudres nanométriques ou sub-micrométriques en flux continu sous l'action d'une pyrolyse laser par interaction entre un faisceau émis par un laser et un flux de réactifs émis par au moins un injecteur, caractérisé en ce que l'on répartit l'énergie du faisceau selon un axe perpendiculaire à l'axe du flux de réactifs en une section allongée, par exemple rectangulaire, de dimensions réglables au niveau d'au moins une zone d'interaction entre ce faisceau et un flux de réactifs émis par un injecteur.

Avantageusement, on compense la perte par absorption de densité de puissance de ce faisceau dans une zone d'interaction au niveau d'un injecteur d'un ensemble de plusieurs injecteurs par une concentration du flux d'énergie dans la zone d'interaction suivante.

Le procédé de l'invention permet d'assurer la production de grandes quantités (supérieur à 500 grammes/heure) de poudres nanométriques (5-100 nanomètres) ou sub-micrométriques (100 - 500 nanomètres) en flux continu. Le procédé de l'invention permet de favoriser les taux de production horaires et de consommer la quasi-totalité (plus de 90%) de l'énergie du laser. Il permet, en outre, de produire des poudres de mêmes caractéristiques (composition chimique, structure, taille, rendements) en sortie des différentes zones d'interaction. Il permet, enfin, de produire des poudres avec des rendements chimiques proches de 100%.

Le procédé de l'invention permet de changer la densité de puissance incidente, en fonction des caractéristiques souhaitées de la poudre, en modifiant la position des injecteurs le long de l'axe du faisceau laser ou en modulant la puissance en sortie du laser.

### BRÈVE DESCRIPTION DES DESSINS

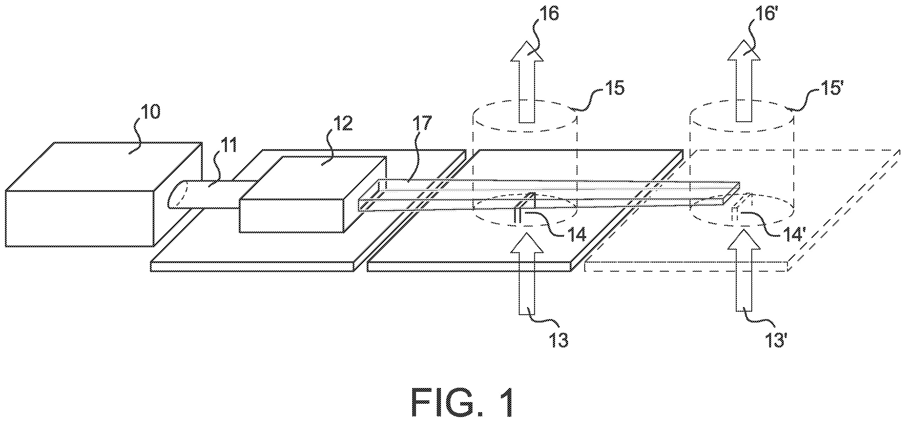

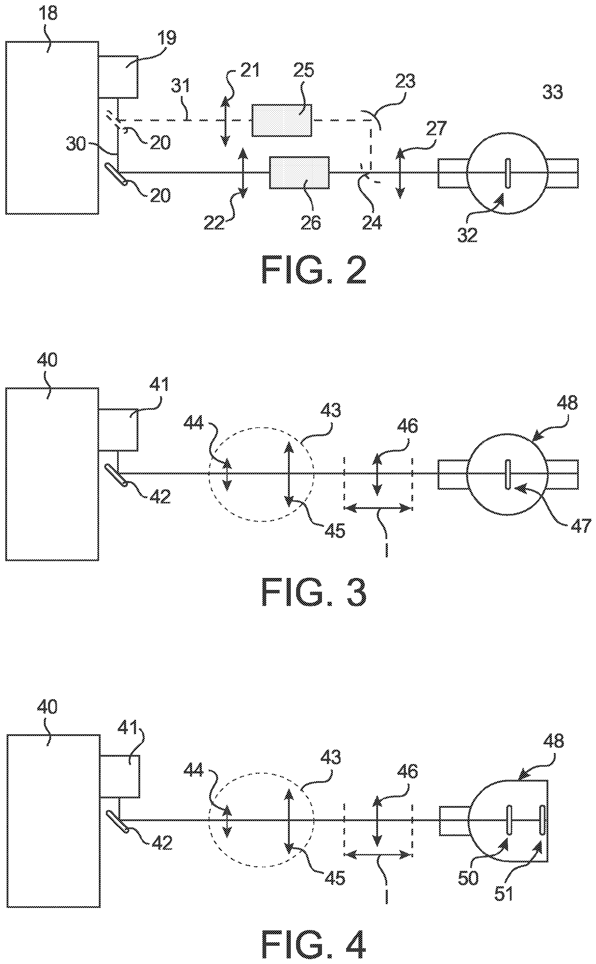

La figure 1 illustre schématiquement le système pour la mise en oeuvre du procédé de l'invention. Le figures 2 à 4 illustrent trois exemples de réalisation du système mettant en oeuvre le procédé de l'invention.

### EXPOSÉ DÉTAILLÉ DE MODES DE RÉALISATION PARTICULIERS

Comme illustré sur la figure 1, le système comprend un laser 10, qui délivre un faisceau 11, suivi d'un dispositif optique 12 permettant de répartir en 17 l'énergie de faisceau, selon un axe perpendiculaire à l'axe d'un flux de réactifs 13, en une section allongée, par exemple rectangulaire, de dimensions réglables, au niveau d'au moins une zone d'interaction 15 entre ce faisceau et ce flux de réactifs 13 émis par au moins un injecteur 14, la production de poudres étant référencée 16.

La mise en forme du faisceau laser sous forme allongée, par exemple rectangulaire, favorise de forts taux de production horaires pour des poudres dont on peut ajuster la taille, la composition et la structure. L'énergie du faisceau peut ainsi être répartie sur une section rectangulaire ou elliptique dont on peut changer indépendamment la largeur ou la hauteur.

L'ajustement de la densité de puissance autorisé par une telle mise en forme permet de former des poudres de tailles pouvant excéder les 10 nanomètres et se rapprocher des 500 nanomètres. Le grossissement des grains peut également être obtenu en réduisant fortement les débits de réactifs.

Avantageusement l'énergie du faisceau laser peut être absorbée en plusieurs zones d'interactions successives 15, 15' jusqu'à ce que l'énergie du faisceau laser soit totalement absorbée. Le paramètre densité de puissance est alors maintenu identique en toutes les zones d'interaction, en compensant la perte par absorption en une zone donnée N-1 par une concentration du flux d'énergie en zone suivante N. On absorbe ainsi la quasi-totalité du flux d'énergie pour produire les poudres nanométriques, les zones d'interaction 15, 15' produisant de moins en moins de poudres à mesure que l'on avance sur le trajet du faisceau. On obtient ainsi un rendement énergétique maximum.

Le procédé de l'invention présente ainsi de nombreux avantages par rapport au procédé, analysé ci-dessus, décrit dans la demande de brevet WO 983796, notamment :
- L'augmentation du taux de production est obtenue par une extension latérale de la section d'injection des réactifs.
- La mise en forme allongée, par exemple rectangulaire, du faisceau laser permet d'accroître significativement les taux de production sur une large gamme de densité de puissance.
- La section d'émission des réactifs des injecteurs peut être maintenue constante sur une plus grande plage de densité de puissance.

On va considérer ci-dessous trois exemples de réalisation du système de l'invention.

### Exemple 1 : Production de poudres nanométriques de SiC en utilisant un laser de 5 kW.

Dans ce premier exemple, comme illustré sur la figure 2 dans une vue de dessus, le système comprend un laser au CO₂ 18 à 5kw émettant à 10, 6 µm et de section 17 mm, un périscope 19, un miroir plan 20, des lentilles sphériques 21, 22 et 27, des miroirs sphériques 23 et 24 et deux kaléidoscopes 25 et 26. Deux modes de réalisation possibles, correspondant à deux trajets 30 et 31 du faisceau laser sont possibles. Le premier trajet 30 permet d'obtenir une section de faisceau de largeur 50 mm et de hauteur 10 mm. Le faisceau est d'abord réfléchi par le miroir plan 20 puis traverse la lentille sphérique 22, le kaléidoscope 26 et la lentille sphérique 27. Le second trajet 31 correspond à une section de faisceau de largeur 50 mm et de hauteur 300 µm. Le faisceau est d'abord réfléchi par le miroir plan 20, dont on a changé la position par rapport au mode précédent, puis il traverse la lentille sphérique 21, le kaléidoscope 25, et est réfléchi par les miroirs sphériques 23 et 24, ce dernier miroir ayant été rajouté, puis traverse la lentille sphérique 27.

Au niveau de la zone d'interaction 32 avec le flux de réactifs (zone de synthèse) émis par l'injecteur, dans le réacteur 33, la puissance est répartie sur un rectangle de largeur de 50 mm et de hauteur 10 mm ou 300 µm. Ainsi on est capable de produire en masse des poudres nanométriques et de modifier la densité de puissance incidente d'un facteur supérieur à 30 sans influer sur le taux de production horaire.

Dans le premier mode de réalisation ce dispositif permet d'assurer plus de 750 W/cm² au niveau de la zone d'interaction avec le flux de réactifs. L'injecteur allongé selon un axe perpendiculaire à l'axe du faisceau laser, par exemple de 4 cm de large sur 2 mm de profondeur, permet d'assurer une production supérieure à 1 kilogramme par heure de poudres nanométriques de SiC.

Dans le second mode de réalisation, ce dispositif permet d'assurer plus de 25000 W/cm² au niveau de la zone d'interaction avec le flux de réactifs. Un injecteur allongé selon un axe perpendiculaire à l'axe du faisceau laser, par exemple de 4 cm de large sur 2 mm de profondeur, permet d'assurer une production supérieure à 1 kilogramme par heure de poudres nanométriques de SiC.

Le second mode permet de former des poudres de SiC plus cristallisées (en terme de nombre et de taille de cristaux) que le premier sans modification des taux de production horaires, le débit et la vitesse des réactifs restant inchangés.

### Exemple 2 : Production de poudres nanométriques de SiC à partir d'un mélange de silane (SiH₄) et d'acéthylène (C₂H₂) en utilisant un laser de 1 kW.

Comme illustré sur la figure 3, le système comprend un laser 40, un périscope 41, un miroir plan 42, un afocal 43 et une lentille cylindrique 46. L'afocal 43 permet de grandir la taille du faisceau jusqu'à la dimension souhaitée en largeur au niveau de la zone d'interaction avec le flux de réactifs. Il peut être composé de deux lentilles convergentes cylindriques 44 et 45, son grandissement étant donné par le rapport des focales de ces lentilles.

Une fois la section du faisceau agrandie, la lentille cylindrique 46 focalise le faisceau au niveau de la zone d'interaction 47 avec le flux de réactifs dans le réacteur 48. La largeur de section du faisceau est définie par l'afocal. En variant la position de la lentille sur une longueur 1, on peut varier la hauteur de section du faisceau au niveau de la zone de synthèse (on se place plus ou moins loin du point focal). En conséquence on concentre plus ou moins de puissance sur le flux de réactifs d'où la variation à volonté de la densité de puissance.

En réalisant une rotation de 90° de la lentille 46 autour de l'axe optique on peut obtenir une tâche très allongée verticalement, ce qui permet d'accroître le temps de séjours des réactifs dans la flamme.

### Exemple 3 : Production de poudres nanométriques de SiC à partir d'un mélange de silane (SiH₄) et d'acéthylène (C₂H₂) en utilisant un laser de 5 kW.

Cet exemple correspond à l'exemple précédent appliqué à un système multi-zones 50 et 51 illustré sur la figure 4. Plusieurs injecteurs de réactifs permettent de consommer le maximum de puissance pour la synthèse. Dans ce cas, les pertes par absorption sont compensées par la concentration du faisceau et il s'agit juste de positionner les injecteurs de sorte que la densité de puissance incidente soit identique à l'entrée du faisceau de réactifs d'un injecteur à l'autre. Dans le précédent exemple, en sortie de la lentille 46, le faisceau converge. En plaçant un premier injecteur avant le point focal, on peut placer d'autres injecteurs les uns à la suite des autres. Le paramètre définissant le positionnement des injecteurs les uns par rapport aux autres est donc la densité de puissance. Il s'agit du rapport de la puissance incidente sur la surface de la section du faisceau. La valeur souhaitée pour ce paramètre dépend de la nature des poudres formées et des caractéristiques souhaitées mais il doit être le même à l'entrée de toutes les zones d'interaction. En effet à chaque zone, on perd de l'énergie par absorption et la concentration du faisceau le long de l'axe permet de compenser les pertes et de retrouver la puissance souhaitée à la zone suivante.

Le tableau ci-dessous illustre les résultats obtenus.

| Zone d'interaction | Puissance à l'entrée de zone (kW/cm²) | Section du faisceau (cm²) | Densité de puissance moyenne (kW/cm²) | Section des injecteurs (cm²) | Débits des réactifs (1/min.) | | Puissance absorbée (W) | Taux de production horaire (kg/h) |
|---|---|---|---|---|---|---|---|---|
| | | | | | SiR₄ | C₂H₂ | | |
| 1 | 4300 | 4 | 1.07 | 1 | 14 | 7 | 2100 | 1.75 |
| 2 | 2200 | 2 | 1.05 | 1 | 14 | 7 | 2100 | 1.75 |
| total | Reste 100 W | | | | | | 4200 W | 3.5 kg/h |

avec un afocal de grandissement trois (largeur de faisceau de 51 mm).

La densité de puissance utilisée est de 1000 W/cm² (pour chacune des zones). Le rendement de réaction est de 100%.

L'énergie utilisée pour former un gramme de poudre est de 1.23 W/g (4300 W/ 3.5 kg), valeur proche de l'énergie utile pour produire un gramme qui est de 1.2 W/g. L'énergie du faisceau laser est consommée à 85% pour la production de poudres nanométriques.

## Revendications

1. Procédé de production de poudres nanométriques ou sub-micrométriques en flux continu sous l'action d'une pyrolyse laser en au moins une zone d'interaction (15, 15') entre un faisceau (11) émis par un laser (10) et un flux de réactifs (13, 13') émis par un injecteur (14, 14'), **caractérisé en ce que** l'on répartit l'énergie du faisceau émis par le laser selon un axe perpendiculaire à l'axe de chaque flux de réactifs, pour obtenir un faisceau de section allongée de dimensions réglables au niveau de cette au moins une zone d'intéraction.

2. Procédé selon la revendication 1, dans lequel la section allongée est une section rectangulaire.

3. Procédé selon la revendication 1, dans lequel on compense la perte de densité de puissance de ce faisceau par absorption dans une zone d'interaction au niveau d'un injecteur d'un ensemble de plusieurs injecteurs par une concentration du flux d'énergie dans la zone d'interaction suivante.

## Patentansprüche

1. Verfahren zur Herstellung von nanometrischen oder submikrometrischen Pulvern in einem kontinuierlichen Strom unter der Wirkung einer Laserpyrolyse in wenigstens einer Wechselwirkungszone (15, 15') zwischen einem Strahl (11), der von einem Laser (10) emittiert wird, und einem Strom von Reagenzien (13, 13'), der von einem Injektor (14, 14') emittiert wird, **dadurch gekennzeichnet, dass** man die Energie des Strahls, der von dem Laser emittiert wird, entlang einer Achse verteilt, die orthogonal zur Achse jedes Stroms von Reagenzien ist, um im Bereich dieser wenigstens einen Wechselwirkungszone einen Strahl von länglichem Querschnitt mit regelbaren Abmessungen zu erhalten.

2. Verfahren nach Anspruch 1, bei dem der längliche Querschnitt ein rechteckiger Querschnitt ist.

3. Verfahren nach Anspruch 1, bei dem man den Leistungsdichteverlust dieses Strahls aufgrund von Absorption in einer Wechselwirkungszone im Bereich eines Injektors einer Gruppe von mehreren Injektoren durch eine Konzentration des Energieflusses in der folgenden Wechselwirkungszone kompensiert.

## Claims

1. A method for continuous flow production of nanometric or sub-micrometric powders by the action of a pyrolytic laser in at least one area of interaction (15, 15') between a beam (11) emitted by a laser (10) and a flow of reagents (13, 13') delivered by an injector (14, 14'), **characterized in that** the energy of the beam emitted by the laser is spread over along an axis perpendicular to the axis of each flow of reactants, so as to get a beam the section of which is elongated with adjustable dimensions at said at least one area of interaction.

2. The method of claim 1, wherein the elongated section is a rectangular section.

3. The method of claim 1, wherein the loss of power density of this beam by absorption in an area of interaction at an injector of a set of a plurality of injectors is compensated for by focusing the energy beam in the next area of interaction.
